(19) Europäisches Patentamt / European Patent Office / Office européen des brevets

(11) **EP 3 474 585 B1**

(12) **EUROPEAN PATENT SPECIFICATION**

(45) Date of publication and mention
of the grant of the patent:
**15.11.2023  Bulletin 2023/46**

(21) Application number: **16902608.5**

(22) Date of filing: **26.12.2016**

(51) International Patent Classification (IPC):
*H04J 11/00* (2006.01)  *H04W 16/20* (2009.01)
*H04W 24/02* (2009.01)  *H04W 28/16* (2009.01)
*H04W 16/12* (2009.01)

(52) Cooperative Patent Classification (CPC):
**H04W 16/20; H04J 11/005; H04J 11/0093;
H04W 16/12; H04W 24/02; H04W 28/16**

(86) International application number:
**PCT/CN2016/112030**

(87) International publication number:
**WO 2017/215232 (21.12.2017 Gazette 2017/51)**

(54) **METHOD AND SYSTEM FOR SELF-ADAPTIVE FREQUENCY ADJUSTMENT FOR USE IN INDOOR COVERAGE NETWORK**

VERFAHREN UND SYSTEM ZUR SELBSTADAPTIVEN FREQUENZEINSTELLUNG ZUR VERWENDUNG IN EINEM NETZWERK MIT INNENRAUMABDECKUNG

PROCÉDÉ ET SYSTÈME DE RÉGLAGE DE FRÉQUENCE AUTO-ADAPTATIF DESTINÉ À ÊTRE UTILISÉ DANS UN RÉSEAU DE COUVERTURE INTÉRIEURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2016  CN 201610418292**

(43) Date of publication of application:
**24.04.2019  Bulletin 2019/17**

(73) Proprietor: **Huizhou TCL Mobile Communication Co., Ltd.
Huizhou, Guangdong 516006 (CN)**

(72) Inventor: **TANG, Yanbo
Huizhou, Guangdong 516006 (CN)**

(74) Representative: **Petraz, Gilberto Luigi et al
GLP S.r.l.
Viale Europa Unita, 171
33100 Udine (IT)**

(56) References cited:
EP-A1- 1 662 826       CN-A- 102 474 743
CN-A- 104 734 830     CN-A- 104 902 484
CN-A- 106 102 076     US-A1- 2009 122 739
US-A1- 2010 093 363   US-A1- 2013 183 983
US-A1- 2014 211 690

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This disclosure relates to the field of communication, and in particular to a method and a system of adaptive frequency regulation for an indoor coverage network.

BACKGROUND OF THE INVENTION

In past few decades, mobile traffic data has multiplied, which has made cellular networks require higher capacity and broader coverage. Satisfying requirements of indoor scenarios is extremely important since 70% of data traffic occurs indoors. However, it is obviously problematic to use a same type of network as a traditional network with a huge outdoor base station to meet indoor coverage because serious penetration losses happens from outdoors to indoors. Nowadays, there are plenty of solutions for indoor coverage, such as digital distributed antenna systems (DASs) based on cells and optical fibers. For micro cell technology, pico cell technology, and femtocell technology, cells are constructed by multiple low-cost and low-power E-UTRAN Node Bs (also known as Evolved Node Bs, eNBs, base stations). DASs based on optical fibers are constructed by centralized baseband units (BBUs) and distributed remote radio heads (RRHs). They are connected by optical fibers, and baseband signals (I/Q data) are transmitted between them.

High density network deployment is essential, no matter whether eNBs or RRHs are used, in order to ensure indoor coverage and huge throughput. However, severe interference from neighboring cell base stations or RRHs limits their performance. Therefore, effective interference coordination becomes necessary within areas commonly covered by neighboring cell base stations and RRHs. In the following, the term "cell" refers to a coverage area of eNBs or RRHs. Two typical technologies of inter-cell interference coordination (ICIC) are fractional frequency reuse (FFR) and soft frequency reuse (SFR). Both methods divide each of a plurality of cells into a central zone and an edge zone. For the FFR technology, a frequency spectrum is also divided into two portions: a central band and an edge band. The central band used in a manner of a reuse factor of one is reused by all users in the central zones. The edge band is divided into several sub-bands used in a manner of a higher reuse factor, and the sub-bands are reused by users in the edge zones. For the SFR technology, the entire band is divided into several sub-bands where one of the sub-bands is assigned to users in the edge zone, and the other of the sub-bands are used by users with lower power in the central zone. There are also plenty of developed ICIC technologies, such as reverse ICIC proposed by SHANGHAI BELL. The purpose of this technology is to increase a reuse factor of the frequency resources. For this concept, each of different reserved sub-bands are assigned to one of neighboring cells in order to replace an available sub-band. Each of the reserved sub-bands is usage-limited in a current serving cell, but can be used by one of the neighboring cells.

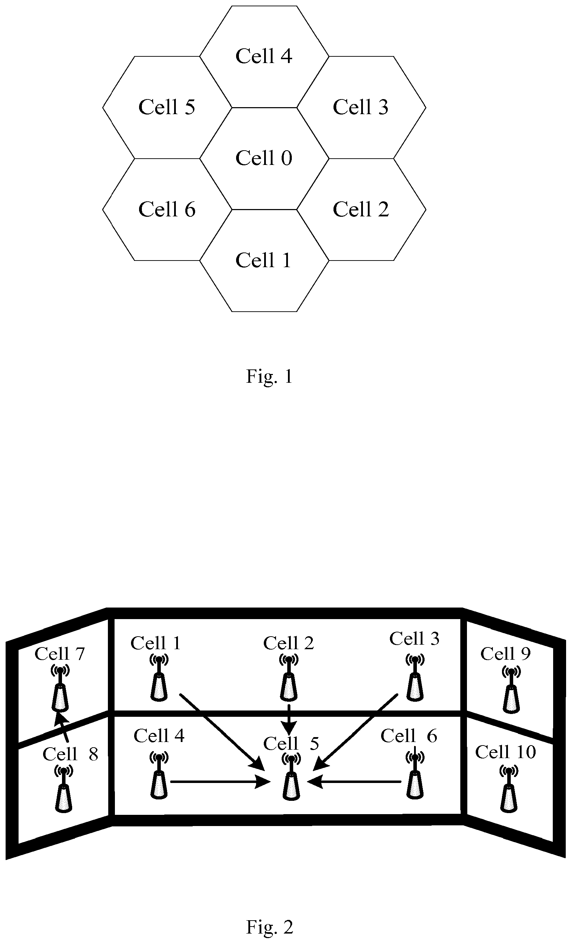

In general, Macro Cells are arranged in hexagons in open outdoor areas. For this type of layout of the cells as illustrated in Fig. 1, an optimal solution for ICIC frequency planning for edge zones of the cells is a planning of 1/3 partitions with a reuse factor of 3, which can be easily completed manually. For indoor coverage, complex and diverse structures and materials of buildings result in irregular layouts of cells. Each has a different number of neighboring cells and key interference. Please refer to Fig. 2, which illustrates an example of a cell layout of a student flat having two floors. Cell 7 only has one neighboring cell, while cell 5 has five neighboring cells. Therefore, the outdoor frequency planning of 1/3 partition pattern cannot be directly used. In addition, the manual frequency planning method is nearly impossible to achieve because a deployment number and locations of the cell base stations or RRHs are unpredictable.

US Application Publication No. US 2010/0093363 A1 discloses a system and method for inter-cell interference mitigation in frequency division multiplexing (FDM) systems.

US Application Publication No. 2013/0183983 A1 discloses a network element for a wireless communication system that supports a plurality of access points providing communication in small cells.

US Application Publication No. 2014/0211690 A1 discloses radio nodes operable in respective cells within in a small cell radio access network (RAN). Each of the radio nodes is configured with dual identities, a first identity of the dual identities being a dedicated physical cell identity (PCI) identity and the second identity of the dual identities being a common PCI identity.

US Application Publication No. 2009/0122739 A1 discloses a wireless communication area measuring apparatus for improving the reduction of interference among cells such as pico cells and ease operations of arranging and controlling the cells.

SUMMARY OF THE INVENTION

Regarding the abovementioned drawbacks of the related art, the object of present disclosure is to provide a method and system of adaptive frequency regulation for an indoor coverage network, which reduce inter-cell interference.

The invention is set out in the appended set of claims.

The present disclosure provides an adaptive frequency regulation method for an indoor coverage network which takes into account irregular layouts of cells and unpredictable radio propagation characteristics of the indoor coverage network. The method of the present disclosure can reduce inter-cell interference.

DESCRIPTION OF THE DRAWINGS

Fig. 1 is an illustration of an layout of cells outdoors under present technology.
Fig. 2 is an illustration of an layout of cells indoors under present technology.
Fig. 3 is a flowchart of the present disclosure provided with an adaptive frequency regulation method for an indoor coverage network.
Fig. 4 is an example of a neighboring cell relationship graph of the present disclosure.
Fig. 5 is a structural diagram of the present disclosure provided with an adaptive frequency regulation system for an indoor coverage network.

DETAILED DESCRIPTION OF THE PREFERRED EMBODIMENTS

The present disclosure provides a method and a system of adaptive frequency regulation for an indoor coverage network. The present disclosure is introduced in detail hereinafter to make the objects, technical solutions, and effects clearer and more certain. It should be understood that the examples here are used to explain the present disclosure, not used to limit the present disclosure.

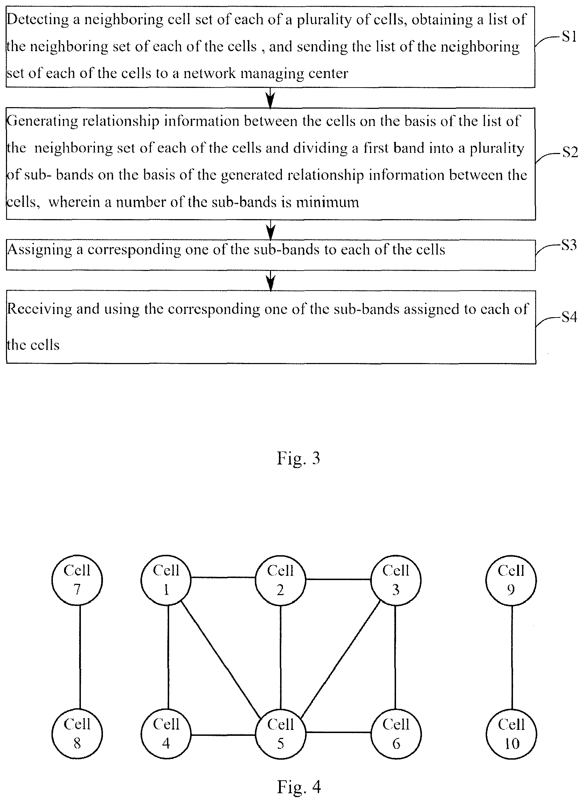

Please refer to Fig. 3, an adaptive frequency regulation method for an indoor coverage network comprises steps:

A cell-performed step S1 of detecting a neighboring cell set of each of a plurality of cells, obtaining a list of the neighboring set of each of the cells, and sending the list of the neighboring set of each of the cells to a network managing center (i.e., an operating, administering, and maintaining (OAM) center);

A network managing center-performed step S2 of generating relationship information between the cells on the basis of the list of the neighboring set of each of the cells and dividing a first band into a plurality of sub-bands on the basis of the generated relationship information between the cells, wherein a number of the sub-bands is minimum and the first band is an available band;

A network managing center-performed step S3 of assigning a corresponding one of the sub-bands to each of the cells.

A cell-performed step S4 of receiving and using the corresponding one of the sub-bands assigned to each of the cells.

The present disclosure mainly includes some aspects as follows:

1. In the present disclosure, a list of neighboring cell set of each of a plurality of cells is generated for each of the cells. In the present disclosure, the wireless environments of the cells are scanned by base stations (E-UTRAN Node Bs, also known as Evolved Node Bs, (eNBs)) or remote radio heads (RRHs). More specifically, scanning is performed when a deployment process of the eNBs or the RRHs is just started and when traffic loads are low. Once the list of the neighboring cell set of any of the cells is generated or updated, the system sends the list of neighboring cell set of any of the cells to the network managing center. Then, the relationship information between the cells is generated.

2. Dividing a first band, determined on the basis of inter-cell interference coordination (ICIC) technology used, into a plurality of sub-bands on the basis of the relationship information between the cells, where the first band is an available band. This step ensures that a minimum number of the sub-bands is obtained and a same sub-band is not assigned to the neighboring cell set.

A traffic load of an edge zone of each of the cells is monitored during execution. If the traffic load of any edge zone exceeds a traffic threshold, a request of interference coordination, i.e., an ICIC request, is sent to the network managing center by the system. After receiving the ICIC request, the network managing center notifies the system which sent the request of assigned sub-bands. Before being notified, the system causes the corresponding cells to reuse the entire band. The present disclosure is a semi-static frequency planning scheme which eliminates interference between neighboring cells and ensures the highest frequency resource utilization at the same time.

The conventional scheme of ICIC is based on a hypothesis that each of a plurality of cells has a same number of neighboring cells, i.e., a situation that each of the cells is made a normal hexagonal shape. For this kind of normal layout of the cells, the entire network uses a same frequency assigning factor, usually 1/3, which is a method easy to implement. In addition, a current frequency planning scheme using mainly manual execution is implemented. Reasons that the frequency planning schemes are improper for an indoor coverage network are as follows.

1. For the indoor coverage network, a layout of a plurality of cells is irregular because of a complex and closed indoor environment. Therefore, a number of neighboring cells and a number of cell interferences vary from cell to cell. Thus, the scheme using the same frequency assigning factor is not suitable for the indoor environment. In addition, there is currently no solution aimed at calculating different frequency partitioning patterns for different cell layouts.

2. The designs and building methods are varied for buildings. For example, office buildings have plenty of small rooms with thin walls in between. A hotel has a large lobby and many corridors. In addition, different decorative shapes and decorative materials change indoor wireless transmission as well. To conclude, indoor predictions become extremely difficult. If frequency planning is performed manually, in-depth research and measurement are required, which is undoubtedly time-consuming and expensive.

The adaptive frequency regulation method for the indoor coverage network provided by the present disclosure can solve the problems of indoor coverage ICIC. The present disclosure includes the four steps S1, S2, S3, and S4 which are described as follows.

The step S1 specifically comprises:

S11. Detecting a target cell with an embedded user equipment (UE) receiver of each of the cells;

S12. For each of the cells, if it is detected that receiving power of a reference signal of the target cell is greater than a predetermined power intensity threshold, then recognizing the target cell as a neighboring cell and adding the target cell into a list of neighboring cell set;

S13. Sending the list of neighboring cell set of each of the cells to the network managing center, to make the network managing center generate a relationship matrix according to which the relationship information between the cells is expressed after receiving the list of neighboring cell set of each of the cells.

To complete the detecting process of the neighboring cell set, each of the eNBs or RRHs has a receiver which is an embedded UE receiver. While the eNBs or RRHs are deployed in the beginning (i.e., before the eNBs or RRHs are in operation), the UE receivers are supplied with power to detect the neighboring cell set. Detecting methods are measuring reference signal received power (RSRP) of cell-specific reference signals (CRSs) and RSRP of channel state information reference signals (CSI-RSs), respectively. More specifically, the detecting methods can be chosen on the basis of whether the eNBs or RRHs belong to the same physical cells or not. The present disclosure sets a power intensity threshold. If the RSRP of another cell scanned is greater than the power intensity threshold of the cell, then the other cell is a neighboring cell of the scanning cell.

Once the neighboring cell set of each of the cells is detected, a list of the neighboring cell set corresponding to identifications (IDs) of the eNBs or RRHs is sent to the network managing center, where the list of the neighboring cell set comprises information of the neighboring cell set.

The step S2 specifically comprises the following step. After receiving the list of neighboring cell set of each of the cells from the eNBs or RRHs, the network managing center generates the relationship information between the cells. Take a scenario in Fig. 2 as an example. The generated relationships are indicated by a matrix C as follows, where 1 represents that two cells are neighboring cells, 0 represents that two cells are isolated (i.e., not neighboring).

$$
\mathbf{C} = \begin{array}{c} \text{Cell ID} \\ \begin{array}{c} 1 \\ 2 \\ 3 \\ 4 \\ 5 \\ 6 \\ 7 \\ 8 \\ 9 \\ 10 \end{array} \end{array}
\begin{array}{cccccccccc}
1 & 2 & 3 & 4 & 5 & 6 & 7 & 8 & 9 & 10 \\
\left[\begin{array}{cccccccccc}
0 & 1 & 0 & 1 & 1 & 0 & 0 & 0 & 0 & 0 \\
1 & 0 & 1 & 0 & 1 & 0 & 0 & 0 & 0 & 0 \\
0 & 1 & 0 & 0 & 1 & 1 & 0 & 0 & 0 & 0 \\
1 & 0 & 0 & 0 & 1 & 0 & 0 & 0 & 0 & 0 \\
1 & 1 & 1 & 1 & 0 & 1 & 0 & 0 & 0 & 0 \\
0 & 0 & 1 & 0 & 1 & 0 & 0 & 0 & 0 & 0 \\
0 & 0 & 0 & 0 & 0 & 0 & 0 & 1 & 0 & 0 \\
0 & 0 & 0 & 0 & 0 & 0 & 1 & 0 & 0 & 0 \\
0 & 0 & 0 & 0 & 0 & 0 & 0 & 0 & 0 & 1 \\
0 & 0 & 0 & 0 & 0 & 0 & 0 & 0 & 1 & 0
\end{array}\right]
\end{array} \quad (1)
$$

The step S1 can specifically comprise the following step after the list of the neighboring cell set of each of the cells is sent to the network managing center. Because the relationships between the cells may change with a change of a building, when the eNBs or RRHs work, the embedded UE receivers also work. When a traffic load is low, such as a traffic load of an office building during the night or a traffic load of a residential building during the day, "almost blank" physical resource blocks (PRBs) can be configured. In these PRBs, a CRS and a CSI-RS can be transmitted but physical downlink shared channel (PDSCH) data cannot be transmitted. In these PRBs, scanning of a neighboring cell set can be completed. If a scanning result differs from the generated list of the neighboring cell set, the list of the neighboring cell set is updated and the network managing center is notified to update the relationship matrix correspondingly. The step S2 can specifically comprise updating the relationship matrix correspondingly.

The step S2 can comprise a step of obtaining a minimum number of sub-bands, which specifically comprises:

S21. Generating a neighboring cell relationship graph according to the relationship matrix;

S22. Adding all cells in the neighboring cell relationship graph to an unassigned group;

S23. Choosing a cell in the unassigned group randomly at a first time, assigning a first sub-band number to the cell chosen at the first time, and adding the cell chosen at the first time into a first sub-band group corresponding to the first sub-band number;

S24. Choosing a cell in the unassigned group randomly at a second time, comparing the cell chosen at the second time with each cell in the first sub-band group to determine whether the cell chosen at the second time neighbors any cell in the first sub-band group; if the cell chosen at the second time neighbors any cell in the first sub-band group, keeping the cell chosen at the second time in the unassigned group; if the cell chosen at the second time does not neighbor any cell in the first sub-band group, assigning the first sub-band number to the cell chosen at the second time and adding the cell chosen at the second time into the first sub-band group corresponding to the first sub-band number, and so on until all cells in the unassigned group have been chosen;

S25. Choosing a cell in the unassigned group randomly again, assigning a second sub-band number to the cell randomly chosen, and adding the cell randomly chosen into a second sub-band group corresponding to the second sub-band number, and determining according to a method of the step S24 and so on until all cells in the unassigned group have been assigned to corresponding sub-band groups. After all the cells in the unassigned group have been assigned, a maximum sub-band number obtained is the minimum number of sub-bands.

The first band (depending on the used ICIC technology, such as FFR or SFR)is divided on the basis of the relationship matrix, where the first band is an available band. The present disclosure needs to ensure that a same sub-band is not assigned to two neighboring cells, and ensure that the minimum number of the sub-bands is obtained from the relationships between the neighboring cells.

In the present disclosure, first, a neighboring cell relationship graph is generated on the basis of the relationship matrix. If an element in the matrix is 1, then a line is drawn between the two corresponding cells (to connect the two cells). Because the relationship matrix is diagonally symmetric, only upper triangular elements of the relationship matrix need to be processed. Assuming that the number of the cells is N, then the neighboring cell relationship graph as illustrated in Fig. 4 can be generated by an algorithm. For the scenario illustrated in Fig. 2 and the relationship matrix shown in equation (1), a specific example of the neighboring cell relationship graph is illustrated in Fig. 4.

The steps to complete calculation for the minimum number of the sub-bands are as follows: First, all the cells on the neighboring cell relationship graph are added into an unassigned group. On the basis of the neighboring cell relationship graph, in the present disclosure a cell is randomly chosen as a first cell assigned and a sub-band number "1" is assigned to this cell. The cell chosen first is added into a group "1" and this cell is removed from the unassigned group. Then, a second cell is randomly chosen from the unassigned group. Whether the second cell chosen is connected to any cell in the group "1" is determined. If not, the sub-band number "1" is assigned to the second cell chosen, and the second cell chosen is added into the group "1" (a sub-band group). If the second cell chosen is connected to any cell in the group "1", the second cell chosen is kept in the unassigned group. The abovementioned process is continuously performed until no cell, which does not neighbor any cell in the group "1", is kept in the unassigned group. In a next iteration, the abovementioned process is repeated, where a current sub-band number assigned is "2", and a corresponding group is "2". After each of the cells are assigned to the corresponding sub-band group, a current maximum sub-band number represents a minimum number of sub-bands. For example, a final assigned maximum sub-band number is 7, and therefore, a minimum number of sub-bands is 7.

A specific algorithm is as follows:

```
for i=1 to N do
for j=1 to N do
if Cij=1 then
```

Draw an edge between cell i and cell j (draw a line between cell i and cell j)

end if
end for
end for

The step S2 can specifically comprise dividing the first band into the sub-bands. Assuming that a maximum sub-band number is K (i.e., a total number of the sub-bands), then, a starting value Si and an ending value Ei of a sub-band i are expressed by the following equation:

$$\begin{cases} S_i = (i-1)\left\lfloor \dfrac{N_{PRB}}{K} \right\rfloor \\ E_i = i \left\lfloor \dfrac{N_{PRB}}{K} \right\rfloor \end{cases}$$

where $N_{PRB}$ represents available frequency resources of PRBs (in the aspect of a number of the PRBs), and $\left\lfloor \dfrac{N_{PRB}}{K} \right\rfloor$ is a floor function that returns a maximum integer which does not exceed $\dfrac{N_{PRB}}{K}$.

The abovementioned equation provides a way for dividing the band on the basis of the needed number of sub-bands in the entire network.

The step S3 specifically comprises an analysis step and an assignment step based on the analysis step as follows. For each cell with a plurality of neighboring cells, such as the cell 5 in Fig. 2, a splittable sub-band can be assigned. However, for each cell with fewer or no neighboring cells, such as the cell 7 in Fig. 2, assigning the sub-band is poor in terms of maximizing efficiency. In such a situation, it is more effective that a second sub-band is reserved to replace a first sub-band, where the first sub-band is an available sub-band. For this object, the network managing center checks the sub-band groups assigned to the cells. If a number of sub-band groups of one group of neighboring cells is equal to the total number of the sub-bands, each sub-band is assigned as the first sub-band to the cell corresponding to each sub-band. If a number of the sub-band groups of one group of neighboring cells is fewer than the total number of the sub-bands, each sub-band is assigned as the second sub-band to the cell corresponding to each sub-band.

ICIC technologies are used to decrease or eliminate ICIC for users in edge zones of cells because performance for the users in the edge zones of the cells are susceptible to interference. In other words, if there are UEs in a common space between neighboring cells, then application of ICIC technologies achieves beneficial effects. Hence, it is necessary to check a scenario of the edge zones of the cells before applying ICIC technologies. For this object, a traffic load of an edge zone of each of the cells is monitored Specifically, a number of the users in the edge zone of each of the cells is calculated or a PRB utilization rate in the edge zone of each of the cells can be measured. The users in the edge zone of each of the cells can be determined by various methods, specifically on the basis of performance of UEs. These methods include measuring an uplink signal-to-interference-plus-noise ratio (SINR) of each serving cell, a feedback report on a downlink SINR of each serving cell, or a feedback report on RSRP difference of each serving cell, where the RSRP difference refers to difference between each serving cell and a neighboring cell set. If the traffic load of the edge zone of one of the cells exceeds a predetermined threshold (the traffic threshold), an ICIC request is sent to the network managing center. Once the ICIC request is received by the network managing center, the assigned sub-bands are fed back to the requesting cell and its neighboring cell set through X2 signaling. The X2 signaling includes an identifier which indicates whether each of the assigned sub-bands is available or reserved, specifically according to the starting PRB and the ending PRB of each of the assigned sub-bands. Then, the step S4 is performed as follows. To ensure a maximum utilization of the frequency resources, each of the cells reuses the entire band until receiving a notification of the assigned sub-band.

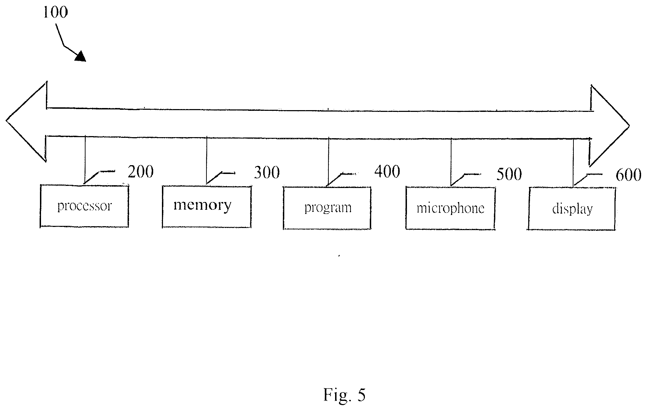

The present disclosure also provides an adaptive frequency regulation system for an indoor coverage network The system comprises: the indoor coverage network comprising a plurality of cells, and a network managing center 100 as illustrated in Fig. 5.

The network managing center 100 comprises: a processor 200 including one or more processing cores, a memory 300 including one or more computer-readable storage media, one or more programs 400 stored in the memory 300, a microphone 500, a display 600, etc. It can be understood by those skilled in the art that a structure of the network managing center 100 illustrated in Fig. 5 is not a limitation to a network managing center which has more or fewer components than those illustrated in the figure, combines some of the components, or arranges the components in a different way.

In the present embodiment, the processor 200 in the network managing center 100 issues commands that cause one or more executable program codes corresponding to one or more processes of one or more application programs to be loaded to the memory 300, and the one or more programs 400 stored in the memory 300 to be executed by the processor 400. Thus, the abovementioned adaptive frequency regulation method for the indoor coverage network is executed, thereby realizing various corresponding functions.

**Claims**

1. An adaptive frequency regulation method for an indoor coverage network, wherein the method comprises:

performing, by a network managing center, steps comprising:

step 1. receiving, from each of a plurality of first cells of the indoor coverage network, a list of neighboring cell set of each of the first cells;
step 2. generating a relationship information between the first cells on the basis of the list of neighboring cell set of each of the first cells;
step 3. generating a neighboring cell relationship graph according to the relationship information;
step 4. adding all cells on the neighboring cell relationship graph into an unassigned group;
step 5. randomly choosing a current first cell from the unassigned group, assigning a current sub-band number to the current first cell, adding the current first cell into a current sub-band group corresponding to the current sub-band number, and removing the current first cell from the unassigned group;
step 6. randomly choosing a current second cell from the unassigned group, determining whether the current second cell neighbors any cell in the current sub-band group, if so, keeping the current second cell in the unassigned group, and if not, assigning the current sub-band number to the current second cell, adding the current second cell into the current sub-band group, and removing the current second cell from the unassigned group;
step 7. iteratively performing the step 6 for a next cell in the unassigned group which has not been chosen with respect to the current sub-band number until all unchosen cells in the unassigned group after the step 6 immediately before the step 7 is performed have been chosen with respect to the current sub-band number;
step 8. iteratively performing the step 5, step 6 and step 7 for a next cell in the unassigned group, a next sub-band number, and a next sub-band group until all cells in the unassigned group after the step 7 immediately before the step 8 is performed have been assigned sub-band numbers; and
step 9. dividing a first band into a plurality of first sub-bands corresponding to the sub-band numbers, wherein a number of the first sub-bands is equal to a total number of the sub-band numbers;

performing, by the network managing center, a step of assigning a corresponding one of the first sub-bands to each of the first cells,

wherein:

the neighboring cell relationship graph comprises a first cell and a neighboring cell set of the first cell, a second cell and a neighboring cell set of the second cell, and a third cell and a neighboring cell set of the third cell;
the first cell and the neighboring cell set of the first cell are assigned a first set of the sub-band numbers;
the second cell and the neighboring cell set of the second cell are assigned a second set of the sub-band numbers; and
the third cell and the neighboring cell set of the third cell are assigned a third set of the sub-band numbers;

wherein the step of assigning the corresponding one of the first sub-bands to each of the first cells comprises:
in response to a number of the first set of the sub-band numbers to be equal to the total number of the sub-band numbers, a number of the second set of the sub-band numbers to be fewer than the total number of the sub-band numbers, and a number of the third set of the sub-band numbers to be fewer than the total number of the sub-band numbers, causing, out of the first sub-bands corresponding to the first set of the sub-band numbers that is available for assignment, a first portion of the first sub-bands corresponding to one of the second set of the sub-band numbers and the third set of the sub-band numbers to be reserved for assignment for both a first portion of the first cells corresponding to the second cell and the neighboring cell set of the second cell and a second portion of the first cells corresponding to the third cell and the neighboring cell set of the third cell; and

transmitting, by the network managing center, the corresponding one of the first sub-bands assigned to each of the first cells to each of the first cells.

2. The method according to claim 1, wherein each of the first sub-bands comprises a starting value and an ending value, and the starting value and the ending value of each of the first sub-bands are calculated as follows:

$$\begin{cases} S_i = (i-1)\left\lfloor \dfrac{N_{PRB}}{K} \right\rfloor \\ E_i = i\left\lfloor \dfrac{N_{PRB}}{K} \right\rfloor \end{cases}$$

wherein K represents a total number of the sub-band numbers, Si represents the starting value of each of the first sub-bands, Ei represents the ending value of each of the first sub-bands, $N_{PRB}$ represents available frequency resources of physical resource blocks, PRBs, and $\left\lfloor \dfrac{N_{PRB}}{K} \right\rfloor$ is a floor function that returns a maximum integer which does not exceed $\dfrac{N_{PRB}}{K}$.

3. An adaptive frequency regulation system for an indoor coverage network, comprising:
   a network managing center comprising:

   a memory configured to store one or more programs;
   a processor configured to execute the one or more programs, which causes a first method to be performed by the network managing center, wherein the first method comprises:

   performing steps comprising:

   step 1. receiving, from each of a plurality of first cells of the indoor coverage network, a list of neighboring cell set of each of the first cells;
   step 2. generating a relationship information between the first cells on the basis of the list of neighboring cell set of each of the first cells;
   step 3. generating a neighboring cell relationship graph according to the relationship information;
   step 4. adding all cells on the neighboring cell relationship graph into an unassigned group;
   step 5. randomly choosing a current first cell from the unassigned group, assigning a current sub-band number to the current first cell, adding the current first cell into a current sub-band group corresponding to the current sub-band number, and removing the current first cell from the unassigned group;
   step 6. randomly choosing a current second cell from the unassigned group, determining whether the current second cell neighbors any cell in the current sub-band group, if so, keeping the current second cell in the unassigned group, and if not, assigning the current sub-band number to the current second cell, adding the current second cell into the current sub-band group, and removing the current second cell from the unassigned group;
   step 7. iteratively performing the step 6 for a next cell in the unassigned group which has not been chosen with respect to the current sub-band number until all unchosen cells in the unassigned group after the step 6 immediately before the step 7 is performed have been chosen with respect to the current sub-band number;
   step 8. iteratively performing the step 5, step 6 and step 7 for a next cell in the unassigned group, a next sub-band number, and a next sub-band group until all cells in the unassigned group after the step 7 immediately before the step 8 is performed have been assigned sub-band numbers; and
   step 9. dividing a first band into a plurality of first sub-bands corresponding to the sub-band numbers, wherein a number of the first sub-bands is equal to a total number of the sub-band numbers;

   performing a step of assigning a corresponding one of the first sub-bands to each of the first cells,

   wherein:

   the neighboring cell relationship graph comprises a first cell and a neighboring cell set of the first cell, a second cell and a neighboring cell set of the second cell, and a third cell and a neighboring cell set of the third cell;

the first cell and the neighboring cell set of the first cell are assigned a first set of the sub-band numbers;

the second cell and the neighboring cell set of the second cell are assigned a second set of the sub-band numbers; and

the third cell and the neighboring cell set of the third cell are assigned a third set of the sub-band numbers;

wherein the step of assigning the corresponding one of the first sub-bands to each of the first cells comprises:

in response to a number of the first set of the sub-band numbers to be equal to the total number of the sub-band numbers, a number of the second set of the sub-band numbers to be fewer than the total number of the sub-band numbers, and a number of the third set of the sub-band numbers to be fewer than the total number of the sub-band numbers, causing, out of the first sub-bands corresponding to the first set of the sub-band numbers that is available for assignment, a first portion of the first sub-bands corresponding to one of the second set of the sub-band numbers and the third set of the sub-band numbers to be reserved for assignment for both a first portion of the first cells corresponding to the second cell and the neighboring cell set of the second cell and a second portion of the first cells corresponding to the third cell and the neighboring cell set of the third cell; and

transmitting the corresponding one of the first sub-bands assigned to each of the first cells to each of the first cells.

4. The system according to claim 3, wherein the system further comprises: the first cells configured to perform a second method comprising:

detecting a neighboring cell set of each of the first cells, obtaining a list of the neighboring cell set of each of the first cells, and sending the list of the neighboring cell set of each of the first cells to the network managing center;

receiving the corresponding one of the first sub-bands assigned to each of the first cells from the network managing center; and

using the corresponding one of the first sub-bands assigned to each of the first cells.

5. The system according to claim 4, wherein the step of detecting the neighboring cell set of each of the first cells, obtaining the list of the neighboring cell set of each of the first cells, and sending the list of the neighboring cell set of each of the first cells to the network managing center comprises:

detecting a target cell with an embedded user equipment, UE, receiver of the one of the first cells;

recognizing, the target cell as a neighboring cell and adding the target cell into the list of the neighboring cell set of the one of the first cells in response to receiving power of a reference signal of the target cell to be detected to be greater than a predetermined power intensity threshold; and

sending the list of the neighboring cell set of the one of the first cells to the network managing center.

6. The system according to claim 5, wherein after the step of sending the list of the neighboring cell set of the one of the first cells to the network managing center, the second method further comprises:

scanning, by the one of the first cells, an updated neighboring cell set and updating the list of the neighboring cell set of the one of the first cells; and

notifying the network managing center of the updated list of the neighboring cell set.

7. The system according to claim 6, wherein the first method further comprises:
updating the relationship information between the first cells on the basis of the updated list of the neighboring cell set.

8. The system according to claim 3, wherein each of the first sub-bands comprises a starting value and an ending value, and the starting value and the ending value of each of the first sub-bands are calculated as follows:

$$\begin{cases} S_i = (i-1)\left\lfloor \dfrac{N_{PRB}}{K} \right\rfloor \\ E_i = i\left\lfloor \dfrac{N_{PRB}}{K} \right\rfloor \end{cases}$$

wherein K represents a total number of the sub-band numbers, Si represents the starting value of each of the first sub-bands, Ei represents the ending value of each of the first sub-bands, $N_{PRB}$ represents available frequency resources of physical resource blocks, PRBs, and $\left\lfloor \dfrac{N_{PRB}}{K} \right\rfloor$ is a floor function that returns a maximum integer which does not exceed $\dfrac{N_{PRB}}{K}$.

**Patentansprüche**

1. Adaptives Frequenzeinstellungsverfahren für ein Innenraumabdeckungsnetzwerk, worin das Verfahren umfasst:

Durchführen, durch ein Netzwerkverwaltungszentrum, von Schritten umfassend:

Schritt 1. Empfangen, von jeder von einer Vielzahl von ersten Zellen des Innenraumabdeckungsnetzwerks, einer Liste von Nachbarzellensätzen von jeder der ersten Zellen,
Schritt 2. Erzeugen einer Beziehungsinformation zwischen den ersten Zellen aufgrund der Liste von Nachbarzellensätzen von jeder der ersten Zellen,
Schritt 3. Erzeugen eines Nachbarzellen-Beziehungsdiagramms gemäß der Beziehungsinformation;
Schritt 4. Hinzufügen sämtlicher Zellen auf dem Nachbarzellen-Beziehungsdiagramm in eine nicht zugewiesene Gruppe;
Schritt 5. Zufälliges Wählen einer aktuellen ersten Zelle aus der nicht zugewiesenen Gruppe, Zuweisen einer aktuellen Teilbandzahl der aktuellen ersten Zelle, Hinzufügen der aktuellen ersten Zelle in eine aktuelle Teilbandgruppe, die der aktuellen Teilbandzahl entspricht, und Entfernen der aktuellen ersten Zelle aus der nicht zugewiesenen Gruppe;
Schritt 6. Zufälliges Wählen einer aktuellen zweiten Zelle aus der nicht zugewiesenen Gruppe, Bestimmen, ob die aktuelle zweite Zelle an irgendeine Zelle in der aktuellen Teilbandgruppe angrenzt, wenn ja, Halten der aktuellen zweiten Zelle in der nicht zugewiesenen Gruppe, und wenn nicht, Zuweisen der aktuellen Teilbandzahl der aktuellen zweiten Zelle, Hinzufügen der aktuellen zweiten Zelle in die aktuelle Teilbandgruppe und Entfernen der aktuellen zweiten Zelle aus der nicht zugewiesenen Gruppe;
Schritt 7. Iteratives Durchführen des Schritts 6 für eine nächste Zelle in der nicht zugewiesenen Gruppe, die im Hinblick auf die aktuelle Teilbandzahl nicht ausgewählt worden ist, bis alle nicht ausgewählten Zellen in der nicht zugewiesenen Gruppe, nachdem der Schritt 6 gleich vor dem Schritt 7 durchgeführt wird, im Hinblick auf die aktuelle Teilbandzahl ausgewählt worden sind;
Schritt 8. Iteratives Durchführen des Schritts 5, des Schritts 6 und des Schritts 7 für eine nächste Zelle in der nicht zugewiesenen Gruppe, eine nächste Teilbandzahl und eine nächste Teilbandgruppe, bis allen Zellen in der nicht zugewiesenen Gruppe, nachdem der Schritt 7 gleich vor dem Schritt 8 durchgeführt wird, Teilbandzahlen zugewiesen worden sind; und
Schritt 9. Teilen eines ersten Bandes in eine Vielzahl von ersten Teilbändern, die den Teilbandzahlen entsprechen, worin eine Zahl der ersten Teilbänder einer Gesamtzahl der Teilbandzahlen gleich ist;

Durchführen, durch das Netzwerkverwaltungszentrum, eines Schritts des Zuweisens eines jeweiligen entsprechenden von den ersten Teilbändern jeder der ersten Zellen,
worin:

das Nachbarzellen-Beziehungsdiagramm eine erste Zelle und einen Nachbarzellensatz der ersten Zelle, eine zweite Zelle und einen Nachbarzellensatz der zweiten Zelle und eine dritte Zelle und einen Nachbarzellensatz der dritten Zelle umfasst,
der ersten Zelle und dem Nachbarzellensatz der ersten Zelle ein erster Satz der Teilbandzahlen zugewiesen ist;
der zweiten Zelle und dem Nachbarzellensatz der zweiten Zelle ein zweiter Satz der Teilbandzahlen zugewiesen ist, und
der dritten Zelle und dem Nachbarzellensatz der dritten Zelle ein dritter Satz der Teilbandzahlen zugewiesen ist;

worin der Schritt des Zuweisens des jeweiligen entsprechenden von den ersten Teilbändern jeder der ersten Zellen umfasst:
in Erwiderung darauf, dass eine Zahl des ersten Satzes der Teilbandzahlen der Gesamtzahl der Teilbandzahlen gleich sein soll, eine Zahl des zweiten Satzes der Teilbandzahlen als die Gesamtzahl der Teilbandzahlen kleiner sein soll, und eine Zahl des dritten Satzes der Teilbandzahlen als die Gesamtzahl der Teilbandzahlen kleiner sein soll, Bewirken, aus den ersten Teilbändern, die dem ersten Satz der Teilbandzahlen entsprechen, der zur Zuweisung verfügbar ist, dass ein erster Abschnitt der ersten Teilbänder, der einem des zweiten Satzes der Teilbandzahlen und des dritten Satzes der Teilbandzahlen entspricht, für die Zuweisung sowohl für einen ersten Abschnitt der ersten Zellen, der der zweiten Zelle und dem Nachbarzellensatz der zweiten Zelle entspricht, als auch für einen zweiten Abschnitt der ersten Zellen, der der dritten Zelle und dem Nachbarzellensatz der dritten Zelle entspricht, vorbehalten wird, und
Übertragen, durch das Netzwerkverwaltungszentrum, des jeweiligen entsprechenden von den ersten Teilbändern, das jeder der ersten Zellen zugewiesen wird, jeder der ersten Zellen.

2. Verfahren nach Anspruch 1, worin jedes von den ersten Teilbändern einen Anfangswert und einen Endwert umfasst, und der Anfangswert und der Endwert von jedem von den ersten Teilbändern wie folgt berechnet werden:

$$\begin{cases} S_i = (i-1)\left\lfloor \dfrac{N_{PRB}}{K} \right\rfloor \\ E_i = i\left\lfloor \dfrac{N_{PRB}}{K} \right\rfloor \end{cases}$$

worin K eine Gesamtzahl der Teilbandzahlen darstellt, $S_i$ den Anfangswert von jedem von den ersten Teilbändern darstellt, $E_i$ den Endwert von jedem von den ersten Teilbändern darstellt, $N_{PRB}$ verfügbare Frequenzressourcen von physischen Ressourcenblöcken, PRB, darstellt und $\left\lfloor \dfrac{N_{PRB}}{K} \right\rfloor$ eine Abrundungsfunktion ist, die eine maximale Ganzzahl zurückgibt, die $\dfrac{N_{PRB}}{K}$ nicht überschreitet.

3. Adaptives Frequenzeinstellungssystem für ein Innenraumabdeckungsnetzwerk, umfassend:
ein Netzwerkverwaltungszentrum umfassend:

einen Speicher, der dazu eingerichtet ist, ein oder mehrere Programme abzuspeichern;
einen Prozessor, der dazu eingerichtet ist, das eine oder die mehreren Programme auszuführen, was bewirkt, dass ein erstes Verfahren durch das Netzwerkverwaltungszentrum durchgeführt wird, worin das erste Verfahren umfasst:

Durchführen von Schritten umfassend:

Schritt 1. Empfangen, von jeder von einer Vielzahl von ersten Zellen des Innenraumabdeckungsnetzwerks, einer Liste von Nachbarzellensätzen von jeder der ersten Zellen,
Schritt 2. Erzeugen einer Beziehungsinformation zwischen den ersten Zellen aufgrund der Liste von Nachbarzellensätzen von jeder der ersten Zellen,
Schritt 3. Erzeugen eines Nachbarzellen-Beziehungsdiagramms gemäß der Beziehungsinformation;
Schritt 4. Hinzufügen sämtlicher Zellen auf dem Nachbarzellen-Beziehungsdiagramm in eine nicht zugewiesene Gruppe;
Schritt 5. Zufälliges Wählen einer aktuellen ersten Zelle aus der nicht zugewiesenen Gruppe, Zuweisen einer aktuellen Teilbandzahl der aktuellen ersten Zelle, Hinzufügen der aktuellen ersten Zelle in eine aktuelle Teilbandgruppe, die der aktuellen Teilbandzahl entspricht, und Entfernen der aktuellen ersten Zelle aus der nicht zugewiesenen Gruppe;
Schritt 6. Zufälliges Wählen einer aktuellen zweiten Zelle aus der nicht zugewiesenen Gruppe, Bestimmen, ob die aktuelle zweite Zelle an irgendeine Zelle in der aktuellen Teilbandgruppe angrenzt, wenn ja, Halten der aktuellen zweiten Zelle in der nicht zugewiesenen Gruppe, und wenn nicht, Zuweisen der aktuellen Teilbandzahl der aktuellen zweiten Zelle, Hinzufügen der aktuellen zweiten Zelle in die aktuelle Teilbandgruppe und Entfernen der aktuellen zweiten Zelle aus der nicht zugewiesenen Gruppe; Schritt 7. Iteratives Durchführen des Schritts 6 für eine nächste Zelle in der nicht zugewiesenen Gruppe, die im Hinblick auf die aktuelle Teilbandzahl nicht ausgewählt worden ist, bis alle nicht ausgewählten Zellen in der nicht zugewiesenen Gruppe, nachdem der Schritt 6 gleich vor dem Schritt 7 durchgeführt wird, im Hinblick auf die aktuelle Teilbandzahl ausgewählt worden sind; Schritt 8. Iteratives Durchführen des Schritts 5, des Schritts 6 und des Schritts 7 für eine nächste Zelle in der nicht zugewiesenen Gruppe, eine nächste Teilbandzahl und eine nächste Teilbandgruppe, bis allen Zellen in der nicht zugewiesenen Gruppe, nachdem der Schritt 7 gleich vor dem Schritt 8 durchgeführt wird, Teilbandzahlen zugewiesen worden sind; und Schritt 9. Teilen eines ersten Bandes in eine Vielzahl von ersten Teilbändern, die den Teilbandzahlen entsprechen, worin eine Zahl der ersten Teilbänder einer Gesamtzahl der Teilbandzahlen gleich ist;

Durchführen eines Schritts des Zuweisens eines jeweiligen entsprechenden von den ersten Teilbändern jeder der ersten Zellen, worin:

das Nachbarzellen-Beziehungsdiagramm eine erste Zelle und einen Nachbarzellensatz der ersten Zelle, eine zweite Zelle und einen Nachbarzellensatz der zweiten Zelle und eine dritte Zelle und einen Nachbarzellensatz der dritten Zelle umfasst, der ersten Zelle und dem Nachbarzellensatz der ersten Zelle ein erster Satz der Teilbandzahlen zugewiesen ist; der zweiten Zelle und dem Nachbarzellensatz der zweiten Zelle ein zweiter Satz der Teilbandzahlen zugewiesen ist, und der dritten Zelle und dem Nachbarzellensatz der dritten Zelle ein dritter Satz der Teilbandzahlen zugewiesen ist;

worin der Schritt des Zuweisens des jeweiligen entsprechenden von den ersten Teilbändern jeder der ersten Zellen umfasst: in Erwiderung darauf, dass eine Zahl des ersten Satzes der Teilbandzahlen der Gesamtzahl der Teilbandzahlen gleich sein soll, eine Zahl des zweiten Satzes der Teilbandzahlen als die Gesamtzahl der Teilbandzahlen kleiner sein soll, und eine Zahl des dritten Satzes der Teilbandzahlen als die Gesamtzahl der Teilbandzahlen kleiner sein soll, Bewirken, aus den ersten Teilbändern, die dem ersten Satz der Teilbandzahlen entsprechen, der zur Zuweisung verfügbar ist, dass ein erster Abschnitt der ersten Teilbänder, der einem des zweiten Satzes der Teilbandzahlen und des dritten Satzes der Teilbandzahlen entspricht, für die Zuweisung sowohl für einen ersten Abschnitt der ersten Zellen, der der zweiten Zelle und dem Nachbarzellensatz der zweiten Zelle entspricht, als auch für einen zweiten Abschnitt der ersten Zellen, der der dritten Zelle und dem Nachbarzellensatz der dritten Zelle entspricht, vorbehalten wird, und Übertragen des jeweiligen entsprechenden von den ersten Teilbändern, das jeder der ersten Zellen zugewiesen wird, jeder der ersten Zellen.

4. System nach Anspruch 3, worin das System ferner umfasst:
die ersten Zellen, die dazu eingerichtet sind, ein zweites Verfahren durchzuführen, umfassend:

Detektieren eines Nachbarzellensatzes von jeder der ersten Zellen, Erhalten einer Liste der Nachbarzellensätze von jeder der ersten Zellen und Senden der Liste der Nachbarzellensätze von jeder der ersten Zellen an das Netzwerkverwaltungszentrum, Empfangen des jeweiligen entsprechenden von den ersten Teilbändern, das jeder der ersten Zellen zugewiesen wird, vom Netzwerkverwaltungszentrum; und Benutzen des jeweiligen entsprechenden von den ersten Teilbändern, das jeder der ersten Zellen zugewiesen wird.

5. System nach Anspruch 4, worin der Schritt des Detektierens des Nachbarzellensatzes von jeder der ersten Zellen, des Erhaltens der Liste der Nachbarzellensätze von jeder der ersten Zellen und des Sendens der Liste der Nachbarzellensätze von jeder der ersten Zellen an das Netzwerkverwaltungszentrum umfasst:

Detektieren einer Zielzelle mit einer eingebetteten Benutzerausrüstung, UE, Empfänger von einer der ersten Zellen,

Erkennen der Zielzelle als Nachbarzelle und Hinzufügen der Zielzelle in die Liste der Nachbarzellensätze von der einen der ersten Zellen in Erwiderung auf das Empfangen von Leistung eines Referenzsignals der Zielzelle, die detektiert werden soll, die als eine vorbestimmte Leistungsstärkenschwelle größer sein soll, und

Senden der Liste der Nachbarzellensätze von der einen der ersten Zellen an das Netzwerkverwaltungszentrum.

6. System nach Anspruch 5, worin nach dem Schritt des Sendens der Liste der Nachbarzellensätze von der einen der ersten Zellen an das Netzwerkverwaltungszentrum das zweite Verfahren ferner umfasst:

Abtasten, durch die eine der ersten Zellen, eines aktualisierten Nachbarzellensatzes und Aktualisieren der Liste der Nachbarzellensätze von der einen der ersten Zellen, und

Mitteilen dem Netzwerkverwaltungszentrum der aktualisierten Liste der Nachbarzellensätze.

7. System nach Anspruch 6, worin das erste Verfahren ferner umfasst:
Aktualisieren der Beziehungsinformation zwischen den ersten Zellen aufgrund der aktualisierten Liste der Nachbarzellensätze.

8. System nach Anspruch 3, worin jedes von den ersten Teilbändern einen Anfangswert und einen Endwert umfasst, und der Anfangswert und der Endwert von jedem von den ersten Teilbändern wie folgt berechnet werden:

$$\begin{cases} S_i = (i-1) \left\lfloor \dfrac{N_{PRB}}{K} \right\rfloor \\ E_i = i \left\lfloor \dfrac{N_{PRB}}{K} \right\rfloor \end{cases}$$

worin K eine Gesamtzahl der Teilbandzahlen darstellt, Si den Anfangswert von jedem von den ersten Teilbändern darstellt, Ei den Endwert von jedem von den ersten Teilbändern darstellt, $N_{PRB}$ verfügbare Frequenzressourcen von physischen Ressourcenblöcken, PRB, darstellt und $\left\lfloor \dfrac{N_{PRB}}{K} \right\rfloor$ eine Abrundungsfunktion ist, die eine maximale Ganzzahl zurückgibt, die $\dfrac{N_{PRB}}{K}$ nicht überschreitet.

**Revendications**

1. Procédé de régulation de fréquence adaptative pour un réseau de couverture intérieur, dans lequel le procédé comprend :

l'exécution, par un centre de gestion de réseau, des étapes comprenant :

étape 1. recevoir, de chacune d'une pluralité de premières cellules du réseau de couverture intérieure, une liste d'ensemble de cellules voisines de chacune des premières cellules ;
étape 2. générer des informations de relation entre les premières cellules sur la base de la liste de l'ensemble de cellules voisines de chacune des premières cellules ;
étape 3. générer un graphique de relation de cellules voisines en fonction des informations de relation ;
étape 4. ajouter toutes les cellules sur le graphique de relation de cellules voisines dans un groupe non attribué ;
étape 5. choisir au hasard une première cellule actuelle dans le groupe non attribué, attribuer un numéro de sous-bande actuel à la première cellule actuelle, ajouter la première cellule actuelle dans un groupe de sous-bandes actuel correspondant au numéro de sous-bande actuel, et retirer la première cellule actuelle du groupe non attribué ;
étape 6. choisir au hasard une deuxième cellule actuelle dans le groupe non attribué, déterminer si la deuxième cellule actuelle est voisine d'une cellule dans le groupe de sous-bandes actuel, si c'est le cas, conserver la deuxième cellule actuelle dans le groupe non attribué, et si ce n'est pas le cas, attribuer le numéro de sous-bande actuel à la deuxième cellule actuelle, ajouter la deuxième cellule actuelle dans le groupe de sous-bandes actuel, et retirer la deuxième cellule actuelle du groupe non attribué ;

étape 7. effectuer de manière itérative l'étape 6 pour une cellule suivante dans le groupe non attribué qui n'a pas été choisie par rapport au numéro de sous-bande actuel jusqu'à ce que toutes les cellules non choisies dans le groupe non attribué après l'étape 6 immédiatement avant l'étape 7 aient été choisies par rapport au numéro de sous-bande actuel ;

étape 8. effectuer de manière itérative l'étape 5, l'étape 6 et l'étape 7 pour une cellule suivante dans le groupe non attribué, un numéro de sous-bande suivant et un groupe de sous-bandes suivant jusqu'à ce que toutes les cellules dans le groupe non attribué après l'étape 7 immédiatement avant que l'étape 8 ne soit effectuée aient reçu des numéros de sous-bandes ; et

étape 9. diviser une première bande en une pluralité de premières sous-bandes correspondant aux numéros de sous-bandes, dans lequel un nombre des premières sous-bandes est égal à un nombre total des numéros de sous-bandes ;

l'exécution, par le centre de gestion de réseau, d'une étape d'attribution d'une sous-bande correspondante des premières sous-bandes à chacune des premières cellules,
dans lequel :

le graphique de relation de cellules voisines comprend une première cellule et un ensemble de cellules voisines de la première cellule, une deuxième cellule et un ensemble de cellules voisines de la deuxième cellule, et une troisième cellule et un ensemble de cellules voisines de la troisième cellule ;

la première cellule et l'ensemble de cellules voisines de la première cellule se voient attribuer un premier ensemble de numéros de sous-bandes ;

la deuxième cellule et l'ensemble de cellules voisines de la deuxième cellule se voient attribuer un deuxième ensemble de numéros de sous-bandes ; et

la troisième cellule et l'ensemble de cellules voisines de la troisième cellule se voient attribuer un troisième ensemble de numéros de sous-bandes ;

dans lequel l'étape d'attribution de la sous-bande correspondante des premières sous-bandes à chacune des premières cellules comprend :

en réponse à un nombre du premier ensemble des numéros de sous-bandes égal au nombre total des numéros de sous-bandes, un nombre du deuxième ensemble des numéros de sous-bandes inférieur au nombre total des numéros de sous-bandes, et un nombre du troisième ensemble des numéros de sous-bandes inférieur au nombre total des numéros de sous-bandes, provoquant, parmi les premières sous-bandes correspondant au premier ensemble des numéros de sous-bandes disponibles pour l'attribution, une première partie des premières sous-bandes correspondant à l'un du deuxième ensemble des numéros de sous-bandes et du troisième ensemble des numéros de sous-bandes à réserver pour l'attribution à la fois pour une première partie des premières cellules correspondant à la deuxième cellule et l'ensemble de cellules voisines de la deuxième cellule et une deuxième partie des premières cellules correspondant à la troisième cellule et l'ensemble de cellules voisines de la troisième cellule ; et

la transmission, par le centre de gestion de réseau, de la sous-bande correspondante parmi les premières sous-bandes attribuées à chacune des premières cellules à chacune des premières cellules.

2. Procédé selon la revendication 1, dans lequel chacune des premières sous-bandes comprend une valeur de départ et une valeur de fin, et la valeur de départ et la valeur de fin de chacune des premières sous-bandes sont calculées comme suit :

$$\begin{cases} S_i = (i-1)\left\lfloor \dfrac{N_{PRB}}{K} \right\rfloor \\ E_i = i\left\lfloor \dfrac{N_{PRB}}{K} \right\rfloor \end{cases}$$

dans lequel K représente un nombre total de numéros de sous-bandes, $S_i$ représente la valeur de départ de chacune des premières sous-bandes, $E_i$ représente la valeur de fin de chacune des premières sous-bandes, $N_{PRB}$ représente des ressources de fréquence disponibles de blocs de ressources physiques, PRB, et $\left\lfloor \dfrac{N_{PRB}}{K} \right\rfloor$ est une fonction

partie entière qui renvoie un entier maximum qui ne dépasse pas $\frac{N_{PRB}}{K}$.

3. Système de régulation de fréquence adaptative pour un réseau de couverture intérieur, comprenant :
un centre de gestion de réseau comprenant :

une mémoire configurée pour stocker un ou plusieurs programmes ;
un processeur configuré pour exécuter le ou les programmes, ce qui entraîne l'exécution d'un premier procédé par le centre de gestion de réseau, le premier procédé comprenant :

l'exécution des étapes comprenant :

étape 1. recevoir, de chacune d'une pluralité de premières cellules du réseau de couverture intérieure, une liste d'ensemble de cellules voisines de chacune des premières cellules ;
étape 2. générer des informations de relation entre les premières cellules sur la base de la liste de l'ensemble de cellules voisines de chacune des premières cellules ;
étape 3. générer un graphique de relation de cellules voisines en fonction des informations de relation ;
étape 4. ajouter toutes les cellules sur le graphique de relation de cellules voisines dans un groupe non attribué ;
étape 5. choisir au hasard une première cellule actuelle dans le groupe non attribué, attribuer un numéro de sous-bande actuel à la première cellule actuelle, ajouter la première cellule actuelle dans un groupe de sous-bandes actuel correspondant au numéro de sous-bande actuel, et retirer la première cellule actuelle du groupe non attribué ;
étape 6. choisir au hasard une deuxième cellule actuelle dans le groupe non attribué, déterminer si la deuxième cellule actuelle est voisine d'une cellule dans le groupe de sous-bandes actuel, si c'est le cas, conserver la deuxième cellule actuelle dans le groupe non attribué, et si ce n'est pas le cas, attribuer le numéro de sous-bande actuel à la deuxième cellule actuelle, ajouter la deuxième cellule actuelle dans le groupe de sous-bandes actuel, et retirer la deuxième cellule actuelle du groupe non attribué ;
étape 7. effectuer de manière itérative l'étape 6 pour une cellule suivante dans le groupe non attribué qui n'a pas été choisie par rapport au numéro de sous-bande actuel jusqu'à ce que toutes les cellules non choisies dans le groupe non attribué après l'étape 6 immédiatement avant l'étape 7 aient été choisies par rapport au numéro de sous-bande actuel ;
étape 8. effectuer de manière itérative l'étape 5, l'étape 6 et l'étape 7 pour une cellule suivante dans le groupe non attribué, un numéro de sous-bande suivant et un groupe de sous-bandes suivant jusqu'à ce que toutes les cellules dans le groupe non attribué après l'étape 7 immédiatement avant que l'étape 8 ne soit effectuée aient reçu des numéros de sous-bandes ; et
étape 9. diviser une première bande en une pluralité de premières sous-bandes correspondant aux numéros de sous-bandes, dans lequel un nombre des premières sous-bandes est égal à un nombre total des numéros de sous-bandes ;

l'exécution d'une étape d'attribution d'une sous-bande correspondante des premières sous-bandes à chacune des premières cellules,
dans lequel :

le graphique de relation de cellules voisines comprend une première cellule et un ensemble de cellules voisines de la première cellule, une deuxième cellule et un ensemble de cellules voisines de la deuxième cellule, et une troisième cellule et un ensemble de cellules voisines de la troisième cellule ;
la première cellule et l'ensemble de cellules voisines de la première cellule se voient attribuer un premier ensemble de numéros de sous-bandes ;
la deuxième cellule et l'ensemble de cellules voisines de la deuxième cellule se voient attribuer un deuxième ensemble de numéros de sous-bandes ; et
la troisième cellule et l'ensemble de cellules voisines de la troisième cellule se voient attribuer un troisième ensemble de numéros de sous-bandes ;

dans lequel l'étape d'attribution de la sous-bande correspondante des premières sous-bandes à chacune des premières cellules comprend :

en réponse à un nombre du premier ensemble des numéros de sous-bandes égal au nombre total des numéros de sous-bandes, un nombre du deuxième ensemble des numéros de sous-bandes inférieur au nombre total des numéros de sous-bandes, et un nombre du troisième ensemble des numéros de sous-bandes inférieur au nombre total des numéros de sous-bandes, provoquant, parmi les premières sous-bandes correspondant au premier ensemble des numéros de sous-bandes disponibles pour l'attribution, une première partie des premières sous-bandes correspondant à l'un du deuxième ensemble des numéros de sous-bandes et du troisième ensemble des numéros de sous-bandes à réserver pour l'attribution à la fois pour une première partie des premières cellules correspondant à la deuxième cellule et l'ensemble de cellules voisines de la deuxième cellule et une deuxième partie des premières cellules correspondant à la troisième cellule et l'ensemble de cellules voisines de la troisième cellule ; et la transmission de la sous-bande correspondante parmi les premières sous-bandes attribuées à chacune des premières cellules à chacune des premières cellules.

4. Système selon la revendication 3, dans lequel le système comprend en outre :
les premières cellules étant configurées pour effectuer un second procédé comprenant :

la détection d'un ensemble de cellules voisines de chacune des premières cellules, l'obtention d'une liste de l'ensemble de cellules voisines de chacune des premières cellules, et l'envoi de la liste de l'ensemble de cellules voisines de chacune des premières cellules au centre de gestion de réseau ;
la réception de la sous-bande correspondante parmi les premières sous-bandes attribuées à chacune des premières cellules à partir du centre de gestion de réseau ; et
l'utilisation de la sous-bande correspondante des premières sous-bandes attribuées à chacune des premières cellules.

5. Système selon la revendication 4, dans lequel l'étape de détection de l'ensemble de cellules voisines de chacune des premières cellules, d'obtention de la liste de l'ensemble de cellules voisines de chacune des premières cellules, et d'envoi de la liste de l'ensemble de cellules voisines de chacune des premières cellules au centre de gestion de réseau comprend :

la détection d'une cellule cible avec un équipement utilisateur intégré UE, récepteur de l'une des premières cellules ;
la reconnaissance de la cellule cible en tant que cellule voisine et l'ajout de la cellule cible dans la liste de l'ensemble de cellules voisines de l'une des premières cellules en réponse à la puissance de réception d'un signal de référence de la cellule cible à détecter comme étant supérieure à un seuil d'intensité de puissance prédéterminé ; et
l'envoi de la liste de l'ensemble de cellules voisines de l'une des premières cellules au centre de gestion du réseau.

6. Système selon la revendication 5, dans lequel après l'étape d'envoi de la liste de l'ensemble de cellules voisines de l'une des premières cellules au centre de gestion de réseau, le second procédé comprend en outre :

le balayage, par l'une des premières cellules, d'un ensemble de cellules voisines mis à jour et la mise à jour de la liste de l'ensemble de cellules voisines de l'une des premières cellules ; et
la notification au centre de gestion du réseau de la liste mise à jour de l'ensemble de cellules voisines.

7. Système selon la revendication 6, dans lequel le premier procédé comprend en outre :
la mise à jour des informations de relation entre les premières cellules sur la base de la liste mise à jour de l'ensemble de cellules voisines.

8. Système selon la revendication 3, dans lequel chacune des premières sous-bandes comprend une valeur de départ et une valeur de fin, et la valeur de départ et la valeur de fin de chacune des premières sous-bandes sont calculées comme suit :

$$\begin{cases} S_i = (i-1)\left\lfloor \dfrac{N_{PRB}}{K} \right\rfloor \\ E_i = i\left\lfloor \dfrac{N_{PRB}}{K} \right\rfloor \end{cases}$$

dans lequel K représente un nombre total de numéros de sous-bandes, Si représente la valeur de départ de chacune des premières sous-bandes, Ei représente la valeur de fin de chacune des premières sous-bandes, $N_{PRB}$ représente des ressources de fréquence disponibles de blocs de ressources physiques, PRB, et $\left\lceil \dfrac{N_{PRB}}{K} \right\rceil$ est une fonction

partie entière qui renvoie un entier maximum qui ne dépasse pas $\dfrac{N_{PRB}}{K}$.

Fig. 1

Fig. 2

Detecting a neighboring cell set of each of a plurality of cells, obtaining a list of the neighboring set of each of the cells , and sending the list of the neighboring set of each of the cells to a network managing center $\quad$ S1

Generating relationship information between the cells on the basis of the list of the neighboring set of each of the cells and dividing a first band into a plurality of sub- bands on the basis of the generated relationship information between the cells, wherein a number of the sub-bands is minimum $\quad$ S2

Assigning a corresponding one of the sub-bands to each of the cells $\quad$ S3

Receiving and using the corresponding one of the sub-bands assigned to each of the cells $\quad$ S4

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100093363 A1
- US 20130183983 A1
- US 20140211690 A1
- US 20090122739 A1